# EUROPEAN PATENT APPLICATION

(11) **EP 3 992 532 A1**
(43) Date of publication of application: **04.05.2022**
(21) Application number: 20204829.4
(22) Date of filing: 30.10.2020
(51) Int. Cl.: F24C 15/20, F24F 3/14

(54) **KITCHEN HOOD COMPRISING AN AIR PURIFICATION ASSEMBLY**

(71) Applicant: Silverline Endüstri ve Ticaret A.S., 05300 Amasya (TR)
(72) Inventor: Ceviksever, Tolga Güven, 05300 Amasya (TR)
(74) Representative: Mutlu, Aydin

(57) **Abstract**

The present invention relates to a dehumidifier assembly (1) for installation within an aperture of a kitchen hood with a fan (9), overlying a cooking appliance. The assembly (1) comprises, a liquid collection chamber (2), a calcium chloride structure (5), a receptacle (3) to receive said calcium chloride structure (5), wherein, said receptacle (3) comprises a plurality of apertures (4) thereon adapted to allow the passage of air into the fan (9) of a kitchen hood (7), and allow the flowing of liquified calcium chloride and dehumidified substances into the liquid collection chamber (2), and said liquid collection chamber (2) and said receptacle (3) are pieced together in a leak-proof manner by mounting means, and said liquid collection chamber (2) and/or said receptacle (3) comprises mounting means for detachable installation of the assembly (1) within the kitchen hood (7).

## Description

### Technical Field of the Invention

The present invention generally relates to a novel kitchen hood comprising an air purification assembly. The present invention particularly relates to a kitchen hood having an air purification assembly comprising liquid collection chamber, a receptacle with a plurality of apertures thereon and a calcium chloride structure placed within said receptacle, where said assembly is installed within an aperture of a kitchen hood overlying a cooking appliance. The air purification assembly according to the present invention ensures the high efficiency of the kitchen hood installation in terms of grease adsorption and dehumidification, and provides convenience for the replacement operation.

### Background of the Invention

The grease retention performance of the range hoods is of great importance in terms of general efficiency and compliance with relevant standards. In the state of the art, a wide variety of kitchen hoods and air treatment assemblies designed for this purpose are available. Said assemblies generally include air treatment devices installed within the kitchen hood's various parts to capture grease and moisture.

One of the typically used assemblies for kitchen hoods is disclosed in CN102631822A. The document discloses a kitchen flue gas absorption liquid used for purifying kitchen air. The absorption liquid is an aqueous solution of one or a mixture of more than one of calcium chloride, lithium chloride, lithium bromide, triethylene glycol or glycol.

Similarly, CN206556142U discloses an air purification system for indoor ventilation and purification. The system disclosed in the document includes a humidity regulator, which is a humidifier, or a dehumidifier with hygroscopic agents such as calcium chloride.

CN110081486A discloses a range hood with a dehumidification module and self-cleaning functions. Self-cleaning function is provided by the cleaning module and the water collected by the dehumidification module. Calcium chloride desiccant is given as a dehumidifying agent for the dehumidification module.

DE1604285A1 discloses a filter for separating impurities and odorous substances from vapours, in particular kitchen fumes, where said filter is made of fibres and is impregnated with calcium chloride or aluminium dichloride.

Assemblies in the prior art fail to provide convenience for the replacement of the desiccant since they require partial or complete disassembly of the kitchen hood and/or the assembly, and fail to achieve the desired level of performance in terms of grease retention and dehumidification. More particularly, insufficient grease retention and capture of the oily content in the extracted air causes a decline in performance of the blowing fan and increase in energy consumption. Hence, there remains a need for an improved assembly, which provides effortless replacement of the air purification device and a superior grease retention performance at low cost

The present invention provides an improved kitchen hood having an air purification assembly comprising a liquid collection chamber, a receptacle with a plurality of apertures thereon and a calcium chloride structure placed within said receptacle, where said assembly is installed within an aperture of the kitchen hood overlying a cooking appliance to overcome the shortcomings of the state of the art and to achieve further advantages. Since the receptacle is adapted to receive and hold the calcium chloride structure, the user may replace the desiccant without the assistance of any tools.

### Brief Description of the Figures

Figure 1 shows a perspective view of the air purification assembly according to the present invention.
Figure 2 shows an exploded view of the air purification assembly according to the present invention.
Figure 3 shows a front view of the air purification assembly according to the present invention.
Figure 4 shows a perspective view from the bottom of the kitchen hood and the air purification assembly according to the present invention.
Figure 5 shows a perspective view from the top of the kitchen hood and the air purification assembly according to the present invention.
Figure 6 shows a bottom view of the kitchen hood according to the present invention with filters.
Figure 7 shows a perspective view from the bottom of the kitchen hood according to the present invention with filters.

### Brief Description of the Invention

The present invention provides an improved kitchen hood (7) comprising a blowing fan (9) for extraction of air from a cooking appliance, and an air purification assembly (1) for installation within an aperture of the kitchen hood (7) in an air passageway through the fan (9), as a solution to the foregoing problems. Said assembly (1) comprises;
- a calcium chloride structure (5), and a receptacle (3) for receiving said structure in an inner volume thereof, and
- a liquid collection chamber (2) disposed in close proximity to the receptacle (3) in a way such thatliquified calcium chloride and substances accumulated thereon would flow into the liquid collection chamber (2),
   wherein, said receptacle (3) comprises a plurality of apertures (4) thereon adapted to allow the air to pass through and get into contact with the calcium chloride structure (5) before reaching to the fan (9), and allow flowing of the liquified calcium chloride and substances accumulated thereon into the liquid collection chamber (2).

According to an advantageous embodiment, the air purification assembly is installed directly before the inlet of the fan (9) such that the liquified calcium chloride and substances accumulated thereon in the receptacle (3) would flow into the liquid collection chamber (2) by way of gravity. For this purpose, said receptacle (3) is disposed in an inner volume of said liquid collection chamber (2) in a leak-proof manner.

The liquid collection chamber (2) and/or said receptacle (3) as mentioned above may further comprise a fixing means (10) for detachable installation of the assembly (1) within the kitchen hood (7). Such fixing means (10) can be embodied as a screw and a hole as shown in the appended figures. Alternatively, a snap-fit arrangement can be provided for the convenience of the user.

Furthermore, mounting of the liquid collection chamber (2) to the receptacle (3) can be achieved in a leak-proof manner by means of a mounting means (6) such as a screw mechanism or a snap-fit fixing assembly.

Preferably, the calcium chloride structure (5) of the air purification assembly is in the form of a cylindrical tablet.

The kitchen hood according to the present invention may further comprise at least one filter (11) disposed before the air purification assembly (1) in a way such that the extracted air passes through said filter (11) before passing through air purification assembly (1).

### References

1. Air purification assembly
2. Liquid collection chamber
3. Receptacle
4. Apertures
5. Calcium chloride structure
6. Mounting means
7. Kitchen hood
8. Housing
9. Fan
10. Fixing means
11. Filter

### Detailed Description of the Invention

The present invention relates to a kitchen hood having an air purification assembly comprising a liquid collection chamber, a receptacle with a plurality of apertures thereon and calcium chloride structure placed within said receptacle, where said assembly is installed within an aperture of a kitchen hood overlying a cooking appliance. The present invention is disclosed in more detail with reference to different embodiments hereinbelow.

In the state of the art, a wide variety of filters, filter assemblies and dehumidifiers are used to stop and capture grease and gaseous substances conveyed by cooking appliances. Hereinbelow, all particulate matter and toxic gases that can typically be found in cooking vapours will be referred to as grease, these include but are not limited to substances such as carbon monoxide, nitrogen dioxide, sulphur dioxide, hydrocarbons and volatile organic compounds. Typically, an assembly comprising a hygroscopic agent is employed within said assemblies to dehumidify the cooking vapours and purify the air. However, the arrangements currently in use cannot provide a convenient and simple replacement operation of the desiccant, requiring partial or complete disassembly of the kitchen hood and/or the assembly, and also fail to achieve the desired level of performance in terms of grease retention and dehumidification. This in turn causes the oily content of the cooking fumes to contact with the blowing fan and air passageways, and a decline in performance of the blowing fan in long run. Furthermore, the oily fumes discharged through the outlet can be harmful and annoying in terms of smell for the user especially if the exhaust line of the kitchen hood has an opening close to the kitchen or a living area.

To overcome the shortcomings of said assemblies and the state of the art, a kitchen hood (i.e. range hood) is provided embodiments of which will be disclosed in detail with reference to the drawings.

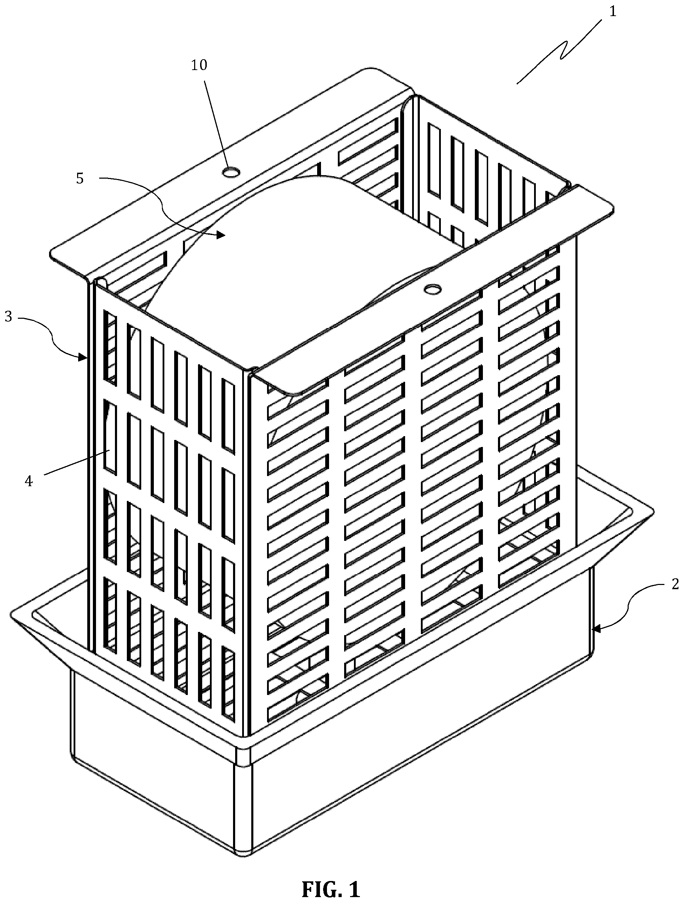

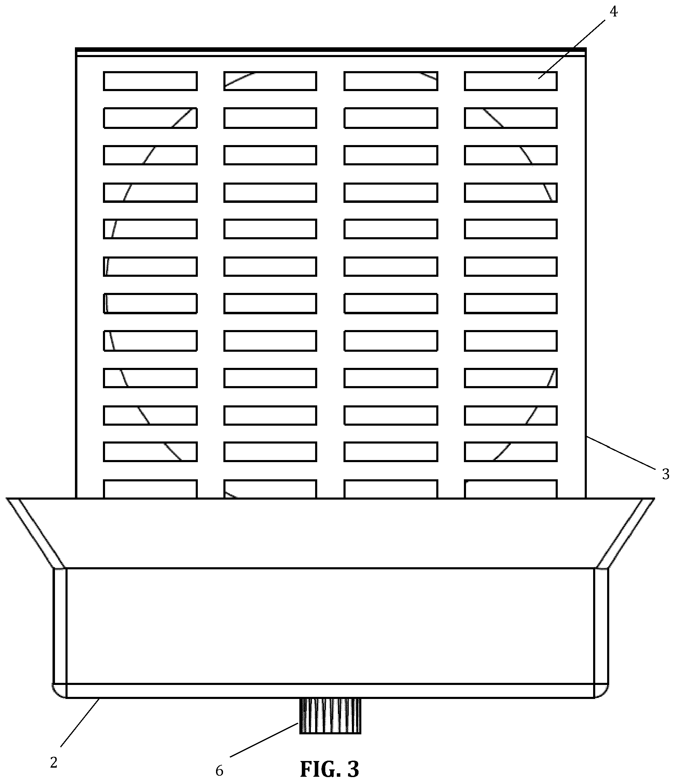

As seen in Fig. 1, Fig. 2 and Fig. 3 from various perspectives, an air purification assembly (1) for installation within an aperture of a kitchen hood (7) overlying a cooking appliance (not shown) comprises a liquid collection chamber (2), a receptacle (3) with a plurality of apertures (4) thereon and calcium chloride structure (5) placed within said receptacle (3). For the calcium chloride structure (5), a cylindrical tablet is given as an example and a preferred embodiment in the drawings, although the structure may be in any shape or form, such as granular form, provided the apertures (4) on the receptacle (3) are adapted to the corresponding shape or form to adequately hold the structure (5). Since the air purification structure comprises calcium chloride, as it absorbs moisture and grease, it slowly liquifies and forms a brine, which flows through the apertures (4), and is then collected by means of the liquid collection chamber (2). In the context of the present description the expression "calcium chloride structure" refers to any structure comprising predominantly of calcium chloride.

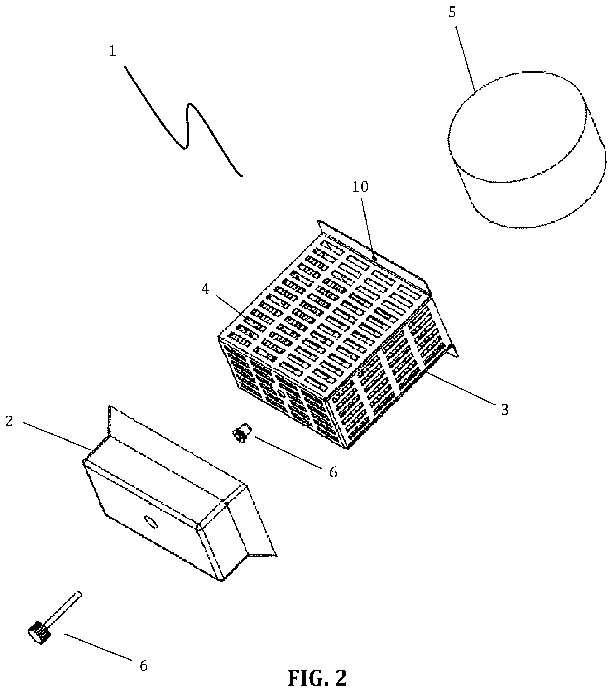

The grease retention process to be carried out by the calcium chloride structure (5) is not to be misunderstood, as it is not only desiccating aqueous vapour conveyed by a cooking appliance. The structure is to desiccate both aqueous vapour and grease vapour, thereby accumulating a mix of grease, water (i.e. accumulated substances) and liquified calcium chloride in the liquid collection chamber (2) over time. The liquid collection chamber (2) and the receptacle (3) are pieced together in a leak-proof manner so that the grease and the brine does not leak from the liquid collection chamber (2). This may be achieved with a mounting means (6) such as a snap-fit combination, or preferably a screw mechanism as seen in Fig. 2, or any other mounting mechanism that a person skilled in the art deems fit in the way described herein.

When the calcium chloride structure (5) is completely liquified, the user may easily place a new calcium chloride structure into the receptacle (3) after the assembly (1) is removed from the aperture of the kitchen hood (7). Since the receptacle (3) simply holds the calcium chloride structure (5) with the aid of gravity and without the assistance of additional tools or mechanisms, the replacement operation can be carried out effortlessly. Advantageously, inasmuch as the assembly (1) is a non-electric dehumidifier, it is to carry out the grease retention process at all times to prevent mold growth and moisture accumulation inside a kitchen, including when the kitchen hood (7) is not in operation. When the kitchen hood (7) is running, the assembly (1) according to the present invention shall retain both the grease and the moisture within cooking vapours and purify the air.

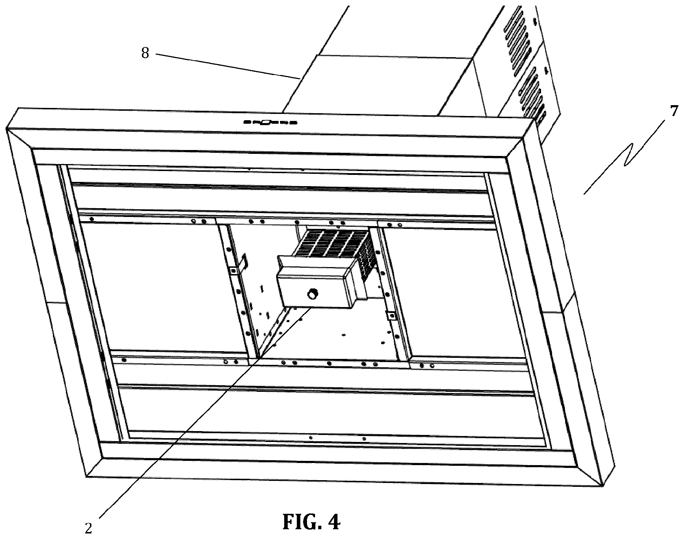

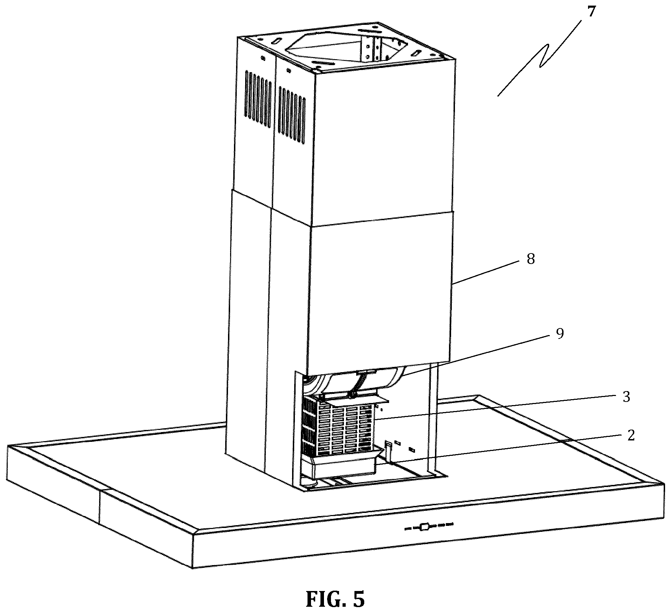

As seen in Fig. 4 and Fig. 5, the filter assembly (1) is to be positioned within a housing (8) of the kitchen hood (7) in such a way that the cooking vapours flow directly through the assembly (1), from the cooking appliance to the fan (9). To be more precise, the assembly (1) is preferably positioned directly below the inlet of the fan (9), between the cooking appliance and the fan (9) to ensure that all the cooking vapours shall flow through the assembly's apertures (4) and into the inlet of the fan (9), as seen in Fig. 5. By means of the apertures (4) allowing the passage of air, the highly efficient absorption and dehumidification of grease and moisture are established. The assembly (1) is adapted to be mounted to any applicable part of the kitchen hood (7) with any mechanism deemed fit, provided the assembly (1) is then detachable from the hood (7). Said mechanism may be employed within the receptacle (3) and/or the liquid collection chamber (2) for installation. As shown in Figures 1 and 2, a fixing means (10) can be provided on the receptacle (3) which can well be formed as a screw and a hole, or alternatively, a snap-fit arrangement can be provided for the convenience of the user.

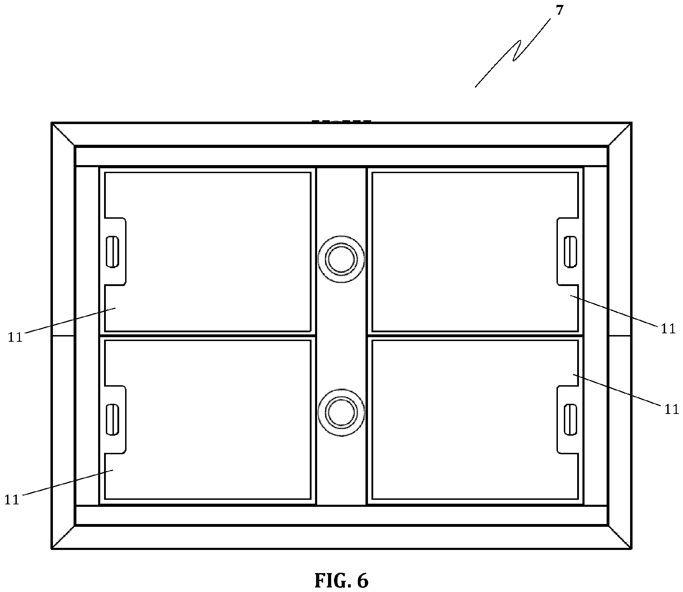

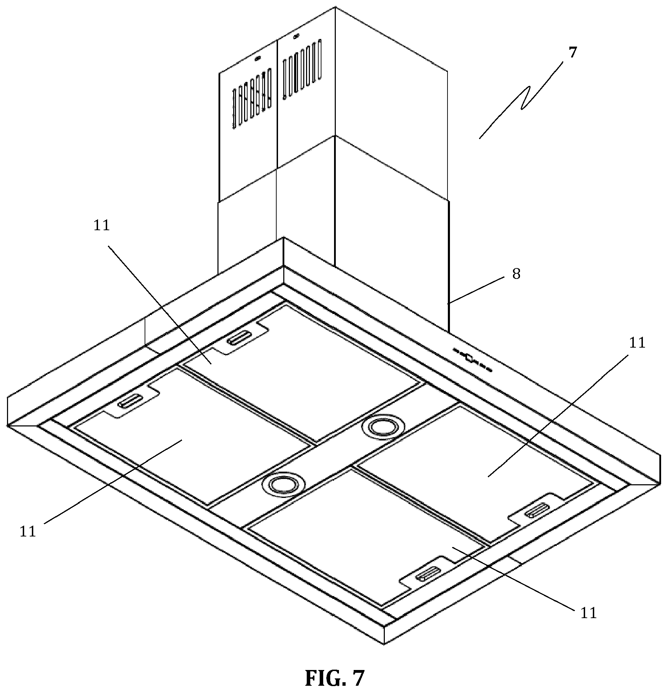

In the kitchen hood (7) according to the present invention, air purification assembly (1) according to the present invention may be used in combination with at least one filter (11), as seen in Fig. 6 and Fig. 7. In this embodiment, the vapour conveyed by a cooking appliance is first filtered by the filter(s) (11), then treated by the assembly (1), and then the purified air flows through the fan (9) to an exhaust line or let back into the kitchen after passing through an additional filter (not shown). Additional filters are used if the exhaust line is not exposed to open air but is redirected to the kitchen after a treatment with special arrangements such as carbon filters. The air purification assembly (1) of the present invention is particularly advantageous in these arrangements because the service life of said filters is extended as they are exposed to less amount of grease in the cooking procedure.

When the assembly (1) according to the present invention is used in combination with atleast one filter (11), the g_{f} value according to IEC 61591 can reach 95% and above, corresponding to A class performance level. Although said filter(s) (11) is/are preferably a metal mesh screen, it can be of any type as long as its inlet is positioned directly above the cooking appliance in such a way that its outlet directs cooking vapours by means of the negative pressure generated by the fan (9) to the apertures (4) of the assembly (1) according to the present invention.

Further advantages of the invention shall be apparent from the explanations above and exemplary drawings appended to the present description.

## Claims

1. A kitchen hood (7) comprising a blowing fan (9) for extraction of air from a cooking appliance, and an air purification assembly (1) for installation within an aperture of the kitchen hood (7) in an air passageway through the fan (9), **characterized in that** the assembly (1) comprises;
- a calcium chloride structure (5), and a receptacle (3) for receiving said structure in an inner volume thereof, and
- a liquid collection chamber (2) disposed in close proximity to the receptacle (3) in a way such thatliquified calcium chloride and substances accumulated thereon would flow into the liquid collection chamber (2),
wherein, said receptacle (3) comprises a plurality of apertures (4) thereon adapted to allow the air to pass through and get into contact with the calcium chloride structure (5) before reaching to the fan (9), and allow flowing of the liquified calcium chloride and substances accumulated thereon into the liquid collection chamber (2).

2. A kitchen hood (7) according to claim 1 wherein said assembly (1) is installed directly before inlet of the fan (9) such that the liquified calcium chloride and substances accumulated thereon in the receptacle (3) would flow into the liquid collection chamber (2) by way of gravity.

3. A kitchen hood (7) according to claim 1 wherein part of said receptacle (3) is disposed in an inner volume of said liquid collection chamber (2) in a leak-proof manner.

4. A kitchen hood (7) according to claim 3 wherein the assembly (1) comprises mounting means (6) for the fixation of liquid collection chamber (2) with the receptacle (3).

5. A kitchen hood (7) according to claim 4 wherein said mounting means (6) comprises a screw mechanism or a snap-fit fixing assembly.

6. A kitchen hood (7) according to claim 1 wherein the liquid collection chamber (2) and/or said receptacle (3) comprises fixing means (10) for detachable installation of the assembly (1) within the kitchen hood (7).

7. A kitchen hood (7) according to claim 6 wherein said fixing means comprises a screw and a hole, or a snap-fit arrangement

8. A kitchen hood (7) according to any of the preceding claims wherein said calcium chloride structure (5) is in the form of a cylindrical tablet.

9. A kitchen hood (7) according to claim 1 wherein said kitchen hood (7) further comprises at least one filter (11) disposed before the air purification assembly (1) in a way such that the extracted air passes through said filter (11) before passing through air purification assembly (1).
